# FASCICULE DE BREVET EUROPEEN

(11) **EP 2 039 946 B1**
(45) Date de publication et mention de la délivrance du brevet: **19.05.2010**
(21) Numéro de dépôt: 08164750.5
(22) Date de dépôt: 19.09.2008
(51) Int. Cl.: F15D 1/12

(54) **Procédé de formation de reliefs perturbateurs de couche limite**
Verfahren zur Erzeugung von Störkonturen in der Grenzschicht
Method of forming raised patterns that disrupt a boundary layer

(30) Priorité: 24.09.2007 FR 0706675
(43) Date de publication de la demande: 25.03.2009
(73) Titulaire: SNECMA, 75015 Paris (FR)
(72) Inventeur: Lebret, Yann, Pascal, Raymond, 77950 Maincy (FR); Mons, Claude, Marcel, 77176 Savigny le Temple (FR)
(74) Mandataire: Bloch & Bonnétat

(56) Documents cités:
- EP-A- 0 626 228
- EP-A- 1 752 234
- WO-A-01/06096
- WO-A-2004/028731
- US-A- 4 907 765
- US-A- 4 994 639

## Description

La présente invention concerne le domaine des turbomachines et vise plus particulièrement un moyen pour améliorer l'écoulement des fluides le long des surfaces à fonction aérodynamique (voir, par exemple, le document WO 2004/028731), telles que des aubes.

Les études montrent que l'efficacité d'une aile ou d'une aube est fortement améliorée par le polissage de sa surface mais que l'organisation de la rugosité du bord d'attaque peut intervenir de façon non négligeable sur le décollement de la couche limite à l'extrados. Les calculs montrent que la création de perturbateurs organisés le long du bord d'attaque peut, à partir d'un état poli, améliorer encore cette efficacité. Des tests sur l'effet « peau de requin » ont été réalisés sur des ailes d'avion et ont montré un gain de consommation spécifique CS de l'ordre de 1%. La « peau de requin » est réalisée à partir de films adhésifs de type Mylar ®.

Par ailleurs, indépendamment de ces questions relatives à l'aérodynamisme, on cherche à améliorer la résistance à la fatigue des pièces telles que des aubes de turbomachine soumises en fonctionnement à de fortes contraintes tant mécaniques que thermiques par mise en compression de couches sous jacentes à leur surface, en particulier dans les zones à proximité du bord d'attaque.

Une technique connue consiste à réaliser cette mise en compression au moyen de chocs laser. Le procédé comprend le recouvrement des surfaces à traiter par un revêtement ablatif tel qu'une peinture ou un ruban adhésif et le tir d'un faisceau laser en direction de la surface ainsi revêtue de manière à produire l'ablation du matériau de recouvrement par pulvérisation. Des ondes de choc sont produites qui sont à l'origine de la mise en compression du matériau traité. L'onde de choc est confinée par un matériau recouvrant le revêtement ablatif et transparent au faisceau laser. Il s'agit généralement d'un rideau d'eau. Le laser doit être capable de délivrer une densité de puissance de l'ordre de 2 à 10 GW/cm² avec des durées d'impulsion de l'ordre de dix à trente nanosecondes et une fréquence de tirs comprise entre moins d'un Herz et quelques Herz.

Les impacts de chocs laser ont une forme ronde, carrée rectangulaire ou en ellipse couvrant une surface de l'ordre de 1 à 2 mm² ou inférieur. Dans le traitement connu, les impacts sont unitaires ou répétés plusieurs fois, trois ou quatre fois en chaque point pour traiter toute la plage de profondeurs et atteindre graduellement les niveaux de contrainte escomptés. En outre le traitement d'une surface donnée est effectué par recouvrement partiel des impacts pour ne pas laisser des surfaces entre impacts qui ne seraient pas traitées. Ainsi on traite la surface en effectuant un balayage par rangées de spots espacés et en réitérant plusieurs fois le balayage avec un léger décalage à chaque fois pour atteindre tous les points de la surface. Une telle technique combinée avec un grenaillage conventionnel est décrite dans la demande de brevet EP 1752234 au nom de la demanderesse. Le traitement d'une aube de turbomachine, et plus particulièrement son bord d'attaque ou son bord de fuite selon la technique par chocs laser est également décrite dans la demande de brevet EP731184.

Par ces recouvrements, on évite la formation de cuvettes au droit des impacts. La formation d'une cuvette implique l'élévation des bords de la cuvette. En effet l'énergie d'un impact d'une onde de choc est de forme sensiblement gaussienne ou trapézoïdale. Cela entraîne la formation d'une cupule avec repoussement de matière vers les bords de l'impact. La hauteur de la crête bordant la cupule dépend des paramètres énergétiques et de la surface de l'impact.

Compte tenu de l'enseignement de cet art antérieur, l'invention a pour objet la réalisation de reliefs perturbateurs en surface de parois parcourues par un fluide dans le but d'en améliorer l'efficacité aérodynamique.

Conformément à l'invention, le procédé pour réaliser en surface d'une paroi, susceptible d'être parcourue par un fluide, des reliefs formant des perturbateurs de la couche limite dans le fluide, est caractérisé par le fait que l'on applique sur ladite surface des chocs laser de manière à créer des crêtes en bordure des impacts, les crêtes constituant les dits reliefs perturbateurs.

Grâce à ce procédé, on transforme le défaut de la technique des chocs laser en avantage. Les reliefs en termes de rugosité sont considérés comme indésirables dans la technique de mise en compression d'une pièce par chocs laser car il s'agit de conserver un état de surface aussi peu perturbé que possible, l'objectif étant l'amélioration des propriétés mécaniques et thermiques de la pièce. Les reliefs maintenant voient leur formation favorisée dans le procédé de l'invention pour constituer des perturbateurs de couche limite visant à en modifier le comportement : retardateur ou déclencheur de turbulences en fonction de l'effet recherché. L'organisation de ces perturbations peut en effet selon les débits /pression et nombres de Reynolds améliorer le comportement de la couche limite en évitant par exemple son décollement pour les très hautes vitesses de fluide.

Il est à noter que le procédé de l'invention continue à mettre à profit la technique de chocs laser pour améliorer les propriétés mécaniques et thermiques de la pièce.

A partir de ce principe de base la mise en oeuvre est variée. Par exemple selon les besoins les impacts ont une forme carrée, rectangulaire , ronde ou en ellipse, les géométries de chaque impacts laser pouvant par ailleurs être programmées, permettant ainsi la création de géométries de surfaces et de perturbateurs selon les conditions de débit /pression et de film.

L'organisation de la succession des impacts est également variée. Ils peuvent par exemple, au moins pour une partie d'entre eux, être adjacents les uns avec les autres.

On peut faire varier l'énergie appliquée en fonction de l'impact de manière à obtenir des reliefs perturbateurs de hauteurs différentes. Les distances entre les reliefs peuvent elles mêmes suivre des lois mathématiques par exemple.

Le procédé de l'invention est avantageusement appliqué au traitement d'une paroi d'une aube de turbomachine, notamment d'une aube de compresseur d'un moteur à turbine à gaz.

D'autres caractéristiques et avantages ressortiront de la description qui suit de modes de réalisation en référence aux dessins annexés sur lesquels :
- La figure 1 représente un exemple d'impact unitaire de choc laser ; la figure 1A est un graphique indiquant le niveau d'énergie en fonction de la distance sur la pièce, la figure 1B montre en coupe l'état de surface de la pièce après un impact et la figure 1C montre la pièce vue de dessus ;
- La figure 2 montre par un graphique 2A et une coupe 2B de la pièce P recevant les impacts, l'effet produit par une succession d'impacts de chocs laser ;
- La figure 3 montre par un graphique 3A et une coupe de la pièce P recevant les impacts, l'effet produit par une autre succession d'impacts.
- La figure 4 montre l'évolution de la couche limite d'un écoulement fluide sur un profil d'aile.
- La figure 5 montre un exemple de réalisation de succession d'impacts sur un profil d'aube.

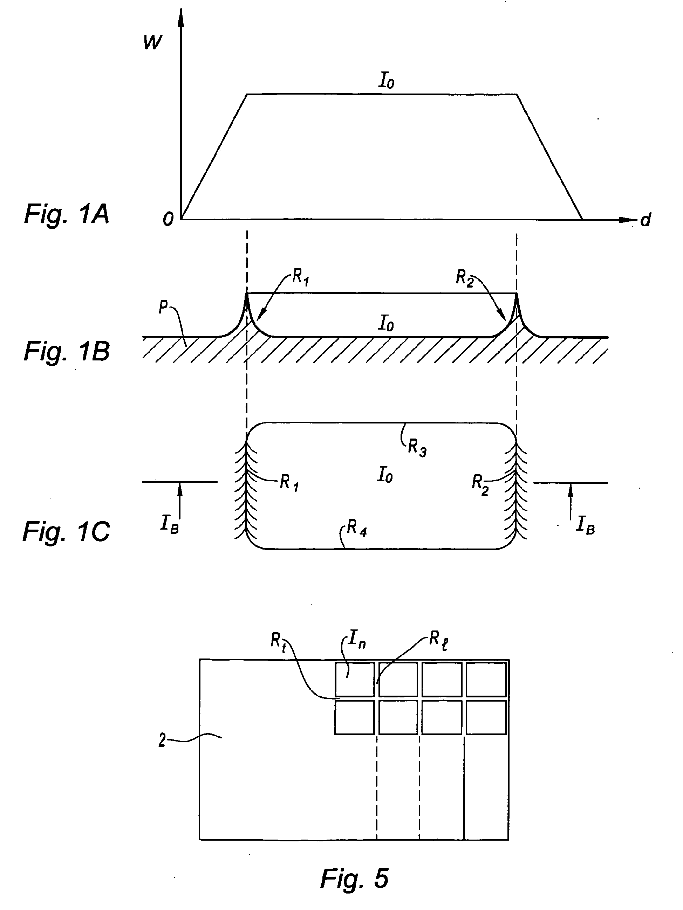

La figure 1 est en trois parties 1A, 1B et 1C. Le graphique de la figure 1A illustre la variation d'énergie W en ordonnée appliquée en travers de l'impact. L'abscisse donne la distance d. On voit que l'énergie est uniforme et maximale dans la zone centrale de l'impact 10. Elle diminue progressivement quand on s'éloigne de l'impact. Sur le schéma 1B, qui est une coupe de la pièce P dans la zone de l'impact 10 et montre son état de surface, la matière est repoussée sur les bords de l'impact 10 et forme des reliefs latéraux R1 et R2, vus en coupe. La hauteur des reliefs dépend de l'énergie du choc et des propriétés du substrat recevant le choc laser.

En vue de dessus, la forme de la zone déformée par l'impact dépend de celle du faisceau, ici la forme de l'impact est rectangulaire. La zone déformée a la forme d'une cuvette bordée de quatre murets ou reliefs R1, R2, R3 et R4.

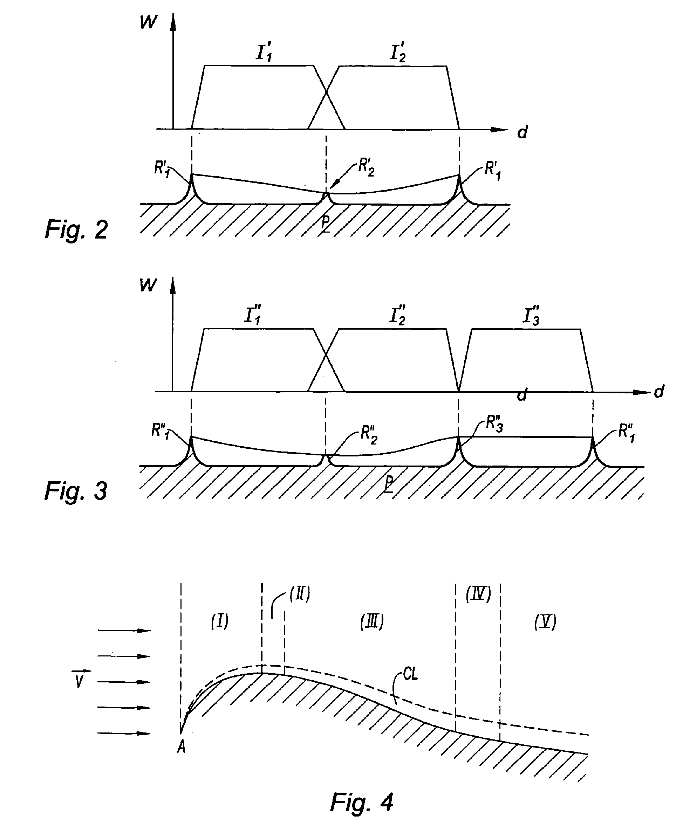

La figure 2 comme la figure1 un graphique 2A et une coupe sur la figure 2B de la pièce P, le long de la zone d'impact. Elle montre l'effet du recouvrement de deux chocs laser I'1 et I'2. Les reliefs R'2, dans la partie de recouvrement des deux impacts, sont écrasés. Ce recouvrement est recherché pour les zones où l'on veut une faible rugosité et un écoulement laminaire.

La figure 3 montre comme la figure 1 un graphique 3A et une coupe sur la figure 3B de la pièce P. Les reliefs R"2, R"3, toutes choses étant égales par ailleurs, résultant du recouvrement des impacts, peuvent être plus ou moins hauts selon que les chocs I''1, I''2, I''3 se recouvrent plus ou moins partiellement. Ainsi le relief R"2 résulte du chevauchement des deux impacts I''1 et I''2 qui est plus étendu que pour le relief R"3 ; il est plus écrasé que ce dernier.

L'écoulement d'un fluide autour d'un profil PR, d'aube par exemple, est montré sur la figure 4. Il s'agit de l'écoulement le long de l'extrados de l'aube. Le fluide aborde la pièce à une vitesse V uniforme en hauteur. Cette vitesse est modifiée le long de la surface du profil. En particulier l'épaisseur de la couche limite CL, dont la frontière avec l'écoulement turbulent est illustrée par le trait en pointillés, croît depuis le point d'arrêt A sur une première partie (I) ; la couche limite est laminaire (I). Puis, dans une région de transition (II), elle devient progressivement turbulente. En suite la couche limite est turbulente sur une partie (III) de l'extrados avant de décoller dans la zone (IV) et après cette zone former un sillage turbulent (V).

L'étendue de la première partie (I) dans laquelle la couche limite est laminaire dépend en fait de l'état de la rugosité du profil. Dans le cas d'un écoulement laminaire l'épaisseur de la couche limite est plus fine que dans un écoulement turbulent (Les nombres de Reynolds respectifs sont Re -0,5 et Re -1/6). Il y a aussi un plus fort gradient de vitesse à la paroi.

De nombreuses études théoriques et expérimentales - par exemple l'article de P.A. Krogstad et R.A. Antonia : « Surface roughness effects in a turbulent boundary layer » paru dans Experiments in Fluids, Vol. 27, 1999, pp. 450-460, Springer verlag - montrent que pour un écoulement moyen identique, la rugosité de la paroi a une action forte sur le comportement de la couche limite turbulente et non seulement sur la sous couche visqueuse très proche de la paroi. Le traitement permet ainsi de jouer sur deux paramètres : la position de la zone de transition entre écoulement laminaire et turbulent le coefficient de viscosité. Tous les deux interviennent sur le rendement de l'aube et sur l'adhérence de la couche limite.

Autrement dit par le procédé de l'invention, on peut :
- Ménager une zone de transition (II) entre la couche limite laminaire et la couche limite turbulente en créant dans la zone désirée sur la surface de la pièce soumise à l'écoulement des reliefs perturbateurs d'écoulement.
- Maîtriser au mieux la position de cette zone (II) en disposant des reliefs déclencheurs de turbulences dans les zones appropriées.
- Maîtriser au mieux l'intensité de la turbulence dans cette zone de transition par le choix :
   De la forme des surfaces subissant les chocs laser (impacts de forme rectangulaire ou autre...),
   De la hauteur des crêtes parallèles aux bords d'attaque ou de fuite et
   Des écarts entre lignes de crêtes.

La figure 5 représente très schématiquement une partie de la pale d'une aube 2. On a réalisé sur l'extrados de cette aube une pluralité d'impacts In, de forme rectangulaire, alignés le long de la corde de l'aube d'une part et parallèlement à son axe d'autre part. On a formé ainsi des lignes de crête longitudinales R1, et des lignes de crête transversales Rt. Les lignes transversales Rt sont par exemple de moindre hauteur que les crêtes longitudinales R1, par recouvrement des impacts laser sur la hauteur de l'aube. Dans cet exemple, les impacts In sont identiques, mais le procédé de l'invention permet toute variante. Ainsi les zones d'impact peuvent, par exemple, être de surface croissante quand on s'éloigne sur l'aube du bord de fuite (ou d'attaque) de l'aube.

## Revendications

1. Procédé pour réaliser en surface d'une paroi, susceptible d'être parcourue par un fluide, des reliefs formant perturbateurs de la couche limite, **caractérisé par le fait que** l'on applique sur ladite surface des chocs laser de manière à créer des crêtes (R ) en bordure des zones d'impact (I0, I1, I'1, I"1, Ia) desdits chocs laser, les crêtes (R1, R2, R'1, R'2, R"1, R"2 ; R"3 ; R1, Rt) constituant les dits reliefs perturbateurs.

2. Procédé selon la revendication 1 dont les impacts (I0, I l, I'1, I"1, Ia) ont une forme carrée, rectangulaire, ronde ou en ellipse.

3. Procédé selon l'une des revendications précédentes, selon lequel on produit des chocs laser agencés de façon que les impacts réalisés sont adjacents ou partiellement recouvrants les uns avec les autres.

4. Procédé selon l'une des revendications précédentes selon lequel on fait varier l'énergie appliquée en fonction de la zone d'impact, de manière à obtenir des reliefs perturbateurs de hauteurs différentes.

5. Procédé selon l'une des revendications précédentes appliqué à la paroi d'une aube (2) de turbomachine

6. Procédé selon la revendication précédente appliqué à la paroi d'une aube de compresseur d'un moteur à turbine à gaz.

## Claims

1. A method for producing, on a wall surface capable of being swept by a fluid, raised elements forming disrupters of the boundary layer, wherein laser shocks are applied to said surface so as to create peaks (R) on the border of the impact zones (10, I1, I'1, I"1, Ia) of said laser shocks, the peaks (R1, R2, R'1, R'2, R"1, R"2, R"3, R1, Rt), constituting said disruptive raised elements.

2. The method as claimed in claim 1 wherein the impacts (10, I1, I'1, I"1, Ia) have a square, rectangular, round or elliptical shape.

3. The method as claimed in claim 1, wherein laser shocks are produced arranged so that the impacts produced are adjacent or partially overlapping one another.

4. The method as claimed in claim 1, wherein the energy applied is varied according to the impact zone, so as to obtain disruptive raised elements of different heights.

5. The method as claimed in claim 1, applied to the wall of a turbomachine blade (2).

6. The method as claimed in the preceding claim, applied to the wall of a compressor blade of a gas turbine engine.

## Patentansprüche

1. Verfahren zum Herstellen auf der Oberfläche einer Wand, über die ein Fluid fließen kann, von Reliefs, die Störelemente der Grenzschicht bilden, **dadurch gekennzeichnet, dass** auf die Oberfläche Laserstöße angewendet werden, um am Rand der Aufprallbereiche (I0, I1, I'1, I"1, Ia) der Laserstöße Spitzen (R) zu erstellen, wobei die Spitzen (R1, R2, R'1, R'2, R"1, R"2; R"3; RI, Rt) die Störreliefs bilden.

2. Verfahren nach Anspruch 1, wobei die Aufpralle (I0, I1, I'1, I"1, Ia) eine quadratische, rechteckige, runde oder elliptische Form aufweisen.

3. Verfahren nach einem der vorhergehenden Ansprüche, wobei Laserstöße erzeugt werden, die derart eingerichtet sind, dass die ausgeführten Aufpralle nebeneinanderliegen oder sich teilweise überlagern.

4. Verfahren nach einem der vorhergehenden Ansprüche, wobei die angewendete Energie je nach Aufprallbereich geändert wird, um Störreliefs von unterschiedlicher Höhe zu erzielen.

5. Verfahren nach einem der vorhergehenden Ansprüche, angewandt auf die Wand einer Schaufel (2) eines Turbotriebwerks.

6. Verfahren nach einem der vorhergehenden Ansprüche, angewandt auf eine Kompressorschaufel eines Gasturbinentriebwerks.
